# EUROPÄISCHE PATENTANMELDUNG

(11) **EP 1 468 717 A1**
(43) Veröffentlichungstag der Anmeldung: **20.10.2004**
(21) Anmeldenummer: 04006523.7
(22) Anmeldetag: 18.03.2004
(51) Int. Cl.: B01D 50/00, B01D 45/00, B01D 46/14

(54) **Verfahren und Vorrichtung zum Abscheiden von mit Öl- und Emulsionsbestandteilen verunreinigten Gasströmen**

(30) Priorität: 07.04.2003 DE 10316252
(71) Anmelder: Aerob Entstaubungsanlagen GmbH, 71272 Renningen (DE)
(72) Erfinder: Weis, Alexander, D-70469 Stuttgart (DE)
(74) Vertreter: Maser, Jochen, Dipl.-Ing.

(57) **Zusammenfassung**

Die Erfindung betrifft ein Verfahren und eine Vorrichtung zum Abscheiden von mit Öl- und Elmulsionsbestandteilen verunreinigten Gasströmen, bei welchem ein Gehäuse (12) mit zumindest einem Filter (16) vorgesehen ist, dem horizontal das Rohgas zugeführt wird und in Anpassung an die räumlichen Gegebenheiten und den zu reinigenden Volumenstrom ein oder mehrere Gehäuse (12) modular zusammensetzbar sind.

## Beschreibung

Die Erfindung betrifft ein Verfahren und eine Vorrichtung zum Abscheiden von mit Öl- und Emulsionsbestandteilen verunreinigten Gasströmen.

Aus der DE 297 16 492 U1 ist beispielsweise eine derartige Vorrichtung bekannt geworden. Diese Vorrichtung umfasst eine Rohgaseinströmstufe, eine Koaleszier- und Abscheidestufe und eine Reingasabströmstufe, die als Baugruppen aufeinandergesetzt und lösbar miteinander verbunden sind. Über eine Rohgaseinströmstufe erfolgt eine erste Umlenkung des Rohgases in eine Koaleszierstufe. In dieser ist ein Demistor vorgesehen. Im Anschluss daran durchströmt das Rohgas eine Abscheidestufe, bevor über eine weitere Umlenkung das Reingas über eine Reingasabströmstufe abgeführt wird. Diese Vorrichtung, deren Komponenten senkrecht übereinander angeordnet sind, wird durch zwischen den einzelnen Baugruppen befindenden Flansche miteinander verbunden.

Diese Vorrichtung ermöglicht zwar die Anordnung der Baugruppen zueinander durch Flanschverbindungen, so dass einzelne Komponenten ausgetauscht werden können. Diese Vorrichtung weist jedoch den Nachteil auf, dass durch die mehrfache Umlenkung des zu reinigenden Volumenstromes ein schlechter Wirkungsgrad erzielt wird. Zudem sind die Reinigungsergebnisse in Bezug auf die vertikale Durchführung des Volumenstromes von unten nach oben nicht zufriedenstellend. Darüber hinaus ist eine derartige Anordnung an unterschiedliche bauliche Gegebenheiten sowie unterschiedliche Bedingungen in Bezug auf den reinigenden Volumenstrom nicht anpassbar.

Bei dem durch diese Vorrichtung durchgeführten Reinigungsverfahren ist eine mehrstufige Reinigung vorgesehen, die sehr aufwendig ist. Darüber hinaus weist die mehrstufige Reinigung einen schlechten Wirkungsgrad auf. Durch die oberhalb der Koaleszierstufe liegende Abscheidestufe können des weiteren in der Abscheidestufe anlagernde Öl- oder Emulsionströpfchen entgegen der Strömungsrichtung des Volumenstromes nach unten fallen und wiederum aufgewirbelt und zerstäubt werden.

Der Erfindung liegt deshalb die Aufgabe zugrunde, ein Verfahren zum Abscheiden von mit Öl- und Emulsionsbestandteilen verunreinigten Gasströmen zu schaffen, das mit einem geringen Aufwand einen hohen Abscheidungsgrad erzielt, eine kompakte Anordnung und Bauweise aufweist, sowie an bauliche Gegebenheiten als auch an unterschiedliche Mengen der Gasströme anpassbar oder nachrüstbar ist.

Diese Aufgabe wird erfindungsgemäß durch ein Verfahren gemäß den Merkmalen des Anspruchs 1 und eine Vorrichtung gemäß den Merkmalen des Anspruchs 5 gelöst.

Durch die horizontale Zuführung des Rohgases in eine Zuführöffnung des Gehäuses, der dahinter liegend zumindest ein Filterelement von zumindest einem Filter zugeordnet ist, wird eine ungestörte Zuströmung und somit eine gleichmäßig verteilte Durchströmung erzielt. Der verunreinigte Gasstrom wird unmittelbar auf das zumindest eine Filterelement zugeführt, welches gegenüber der Strömungsrichtung des Gasstromes bevorzugt in einem Bereich zwischen 0 und 70° zur Strömungsrichtung geneigt ist. Dadurch können mehrere Filterelemente und somit eine größere Filterfläche je Querschnitt des Volumenstromes vorgesehen sein, wodurch ein erhöhter Wirkungsgrad der Abscheidung erzielt wird. Gleichzeitig kann der Strömungsweg des verunreinigten Gases in einem Filterelement durch die in diesem Winkelbereich angeordnete Anstellung der Filterelemente vergrößert werden, wodurch wiederum eine Erhöhung der Abscheidung erzielt wird.

Durch dieses Verfahren ist ermöglicht, dass ein Abscheideeffekt erhöht wird. Dieser beruht auf der Basis einer Kombination von Massenträgheit, Sperrwirkung, Koaleszenz, Agglomeration und Diffusion.

Das erfindungsgemäße Verfahren ermöglicht die Durchführung einer einstufigen Abscheidung. Dadurch können einfache Verhältnisse mit einer hohen Effektivität gegeben sein, bei der das Aerosol im Reingas gleich oder kleiner als 2,0 mg/m³ beträgt. Dieses einstufige Verfahren wird bevorzugt mit einer Druckdifferenz zwischen 8 bis 11 mbar betrieben, welche mit Messeinrichtungen vor und nach dem zumindest einen Filter erfasst wird.

Nach einer vorteilhaften Ausgestaltung des Verfahrens ist vorgesehen, dass für eine Abscheidung von Ölbestandteilen das Gehäuse mit einem Volumenstrom in etwa zwischen 2.000 bis 20.000 m³/h gespeist wird. Bei dieser Leistung wird ein besonders hoher Wirkungsgrad zur Abscheidung von Ölbestandteilen bewirkt.

Nach einer weiteren vorteilhaften Ausgestaltung der Erfindung ist vorgesehen, dass für eine Abscheidung mit Emulsionsbestandteilen das Gehäuse mit einem Volumenstrom von in etwa 4.000 bis 42.000 m³/h durchsetzt wird. Dadurch kann beispielsweise ein Volumenstrom bezogen auf das Gehäusevolumen von ca. 6.200 [m³/h] / m³ gegeben sein. Dies bedeutet im Verhältnis zum Bauvolumen ein sehr hohes Durchsatzvolumen, was wiederum eine hohe Abscheidungswirkung trotz verhältmäßig geringem Bauraum und somit geringer Filtergröße mit sich bringt.

Das Verfahren zur Abscheidung von Öl- und Emulsionsbestandteilen wird bevorzugt mit einer waagerechte Durchströmung des zumindest einen Filterelementes in zumindest einem Filter erzielt. Dadurch können einfache bauliche Verhältnisse und turbulenzzonenfreie Strömungswege geschaffen werden, welche wiederum eine Erhöhung der Abscheidungswirkung zur Folge haben.

Die erfindungsgemäße Vorrichtung gemäß den Merkmalen des Anspruchs 5 zur Durchführung des Verfahrens weist den Vorteil auf, dass eine kompakte Bauweise geschaffen ist, welche einen beträchtlichen Anstieg der Abscheidungsrate von Öl- und Emulsionsbestandteilen in einem Volumenstrom bezogen auf das Gehäusevolumen ermöglicht. Darüber hinaus ist ein einfacher Aufbau gegeben, der auf die Anforderungen flexibel anpassbar ist. Durch den modularen Aufbau der Vorrichtung zum Abscheiden ist ermöglicht, dass beispielsweise mehrere Gehäuseelemente zueinander positionierbar sind, um einen entsprechend größeren Volumenstrom zu reinigen. Die Anordnung der Gehäuseelemente ist an den jeweils zur Verfügung stehenden Raum hinsichtlich der Grundfläche und Höhe anpassbar. Somit kann durch die Anzahl der zueinander angeordneten Gehäuse als Baugruppenelement eine Anpassung an die zu reinigenden Volumenströme gegeben sein.

Vorteilhafterweise ist vorgesehen, dass zumindest eine Rohgaszuströmstufe vorgesehen ist, welche an die Anzahl der Zuführöffnungen des oder der Gehäuse anpassbar ist. Dadurch ist der modulare Aufbau auch für die Rohgaszuströmstufe vorgesehen, so dass bei einer Umrüstung oder Anpassung der Abscheidevorrichtung eine einfache Anpassung für die Zuführung und Abströmung des Volumenstromes gegeben ist. Analoges ist bevorzugt für die Abführöffnungen des oder der Gehäuse vorgesehen, an welchen die Reingasabströmstufe anschließt.

Die Rohgaszuströmstufe weist in einer bevorzugten Ausführungsform Leitbleche auf, die vorzugsweise einstellbar sind. Dadurch lassen sich gleiche Mengen an Gasströmen den einzelnen Gehäusen zuführen, wodurch sichergestellt ist, dass die einzelnen Filter in den Gehäusen eine gleichmäßige Befüllung erfahren. Somit ist die Reinigung rationeller und die Wartungsintervalle können vergrößert sein.

Nach einer weiteren vorteilhaften Ausgestaltung der Erfindung ist vorgesehen, dass der zumindest einen Zuführöffnung zumindest eine Filterkassette mit wenigstens einem Filterelement zugeordnet ist, welches vorzugsweise durch eine Revisionsöffnung im Gehäuse austauschbar vorgesehen ist. Dadurch kann ein schnelles und einfaches Be- und Entstücken des Gehäuses mit Filtern gegeben sein, wodurch auch die Durchführung der Reinigung erleichtert ist. Des weiteren können die Filterkassetten bzw. die Filterelemente einfach bei unterschiedlichen Anwendungsfällen ausgetauscht werden. Die Filterelemente beziehungsweise Kassettendemistoren bestehen aus Edelstahl und/oder PP-Faserrundgestricken und werden in Abhängigkeit der Verwendung von Emulsion oder Öl entsprechend eingesetzt.

Die Zuführung des Rohgasstromes erfolgt frontseitig zum Gehäuse und bevorzugt in horizontaler Ausrichtung. Die Abführung des Reingasstromes erfolgt rückseitig, seitlich oder nach oben. Das Gehäuse weist entsprechende Vorbereitungen an den Wandabschnitten auf, so dass eine flexible Anpassung an den gewünschten Weg zur Abführung des Reingases beziehungsweise an die baulichen Gegebenheiten ermöglicht ist.

Bevorzugt wird eine Abführung des Reingases nach oben vorgesehen, so dass rückseitig oder seitlich eine Revisionsöffnung vorgesehen ist, um eine einfache Zugänglichkeit zur zumindest einen Filterkassette zu ermöglichen. Auch bei einer seitlichen oder rückseitigen Abströmung kann an einem weiteren seitlichen Wandabschnitt die Anordnung einer Revisionsöffnung vorgesehen sein.

Das Gehäuse weist als weiteren Bestandteil einen Gehäuseabschnitt auf, der unterhalb des Gehäuses vorgesehen ist und zumindest eine Auffangwanne aufweist. Dadurch kann in Abhängigkeit des Einsatzfalles eine Anpassung an die modulare Bauweise mehrerer Gehäuse und deren Anordnung gegeben sein.

Stellt das Gehäuse ein Basismodul dar, erstreckt sich die Auffangwanne vorteilhafterweise über den gesamten Bodenbereich. Zur Anordnung des Gehäuses als Ergänzungsmodul oder Aufbaumodul zu einem Grundmodul ist vorteilhafterweise vorgesehen, dass der untere Gehäuseabschnitt eine Auffangwanne aufweist, welche sich an eine Durchgangsöffnung im Boden anschließt und zumindest geringfügig größer als die darüber angeordnete zumindest eine Filterkassette vorgesehen ist. Dadurch kann eine Verbindung der übereinander angeordneten Innenräume der Gehäuse auf der Reingasseite gegeben sein, um das Reingas abzusaugen. Gleichzeitig ist das Gehäuse durch den anbringbaren Gehäuseabschnitt als solches flexibel einsetzbar und kann durch die entsprechende Anbringung des unteren Gehäuseabschnitts als Grundmodul oder Ergänzungsmodul ausgebildet werden.

Nach einer weiteren vorteilhaften Ausgestaltung der Erfindung ist vorgesehen, dass in einer Filterkassette mehrere Filterelemente beziehungsweise Kassettendemistoren vorgesehen sind und die Filterelemente in einer Draufsicht gesehen eine zick-zack-förmige Anordnung aufweisen oder aus zumindest einer V-förmigen Anordnung bestehen. Dadurch kann eine größere Filterfläche bezogen auf den Strömungsquerschnitt des verunreinigten Gasstromes gegeben sein. Gleichzeitig wird der Reinigungsweg beziehungsweise der Strömungsweg in dem jeweiligen Filterelement erhöht, wodurch der Grad der Abscheidung steigt. Dadurch kann bei gleichem Querschnitt des Volumenstromes das Gehäuse mit einer größeren Menge des Volumenstromes zur Abscheidung beaufschlagt werden. Dadurch steigt die Effektivität dieser Abscheidevorrichtung.

Die Filterelemente sind vorteilhafterweise stehend bzw. vertikal angeordnet. Alternativ ist auch eine übereinanderliegende oder gestapelte Anordnung mit einer zick-zack-förmigen Positionierung möglich.

Die Filterelemente sind vorteilhafterweise fest in der Filterkassette angeordnet. Dadurch kann die Anordnung der Filterelemente beim Ein- und Ausbau der Filterkassette beibehalten werden. Zusätzlich ist eine Reinigung durch Ausströmen der einzelnen Filterelemente erleichtert. Alternativ können die einzelnen Filterelemente auch auswechselbar in der Kassette vorgesehen sein, so dass sowohl gleiche als auch unterschiedliche Filterelemente eingesetzt werden können. Beispielsweise können im Randbereich Filterelemente mit einer geringeren Packungsdichte und in der Mitte mit einer höheren Packungsdichte vorgesehen sein.

Zur Erhöhung der Strömungswirkung ist vorteilhafterweise vorgesehen, dass die Filterkassette ein Gehäuse aufweist, welches front- und rückseitig eine Öffnung zur Durchströmung des verunreinigten Gasstromes aufweist. Dadurch kann eine gezielte Durchströmung ermöglicht sein. Zusätzlich ist eine einfache Handhabung der Filterkassette gegeben, welche mehrere Filterelemente aufnimmt.

Die Filterkassette ist bevorzugt durch eine schnell lösbare Befestigung zur Zuführöffnung im Gehäuse vorgesehen. Die in regelmäßigen Abständen anstehenden Reinigungstätigkeiten der Filterelemente können schnell durchgeführt werden. Bevorzugt ist eine Schraubverbindung vorgesehen, wodurch sichergestellt werden kann, dass eine dichte Anlage der Filterkassette an der Zuführöffnung unter Zwischenschaltung einer Dichtung gegeben ist, so dass das zugeführte Rohgas vollständig den Filter durchströmt.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine perspektivische Darstellung einer erfindungsgemäßen Vorrichtung als Grundmodul,
- Figur 2: eine schematische Schnittdarstellung der Vorrichtung gemäß Figur 1,
- Figur 3: eine schematische Darstellung der Vorrichtung gemäß Fig. 1 zur Darlegung des einstufigen Verfahrens,
- Figur 4: eine schematische Schnittdarstellung in der Draufsicht auf eine Filterkassette mit Filterelementen gemäß Figur 3,
- Figur 5: eine schematische Schnittdarstellung einer Rohgasstufe entlang der Linie III-III in Figur 3,
- Figur 6: eine schematische Darstellung von zwei übereinander angeordneten Modulen,
- Figur 7: eine schematische Darstellung einer alternativen Ausgestaltung von zwei Modulen gemäß Figur 6 und
- Figur 8: eine perspektivische Darstellung einer weiteren alternativen Ausgestaltung der Erfindung.

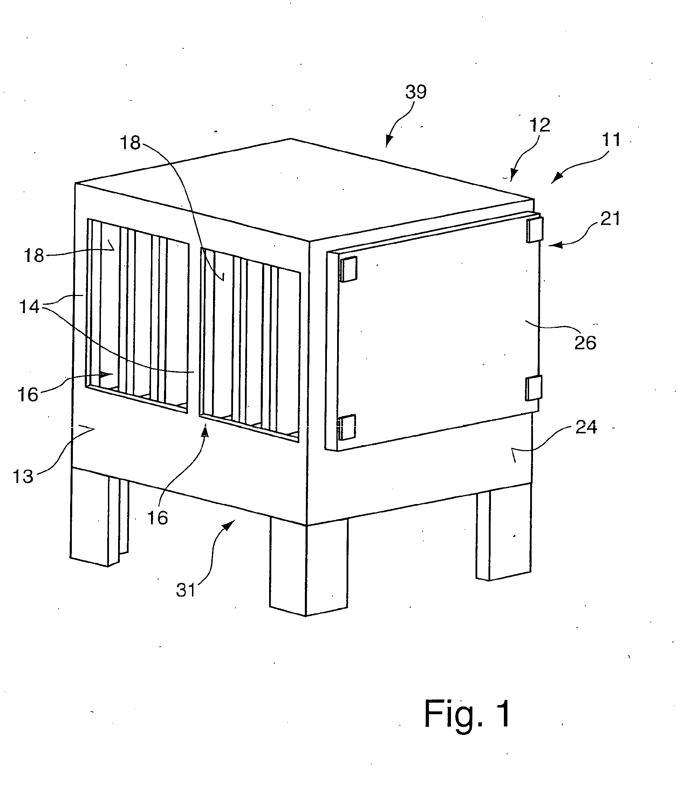

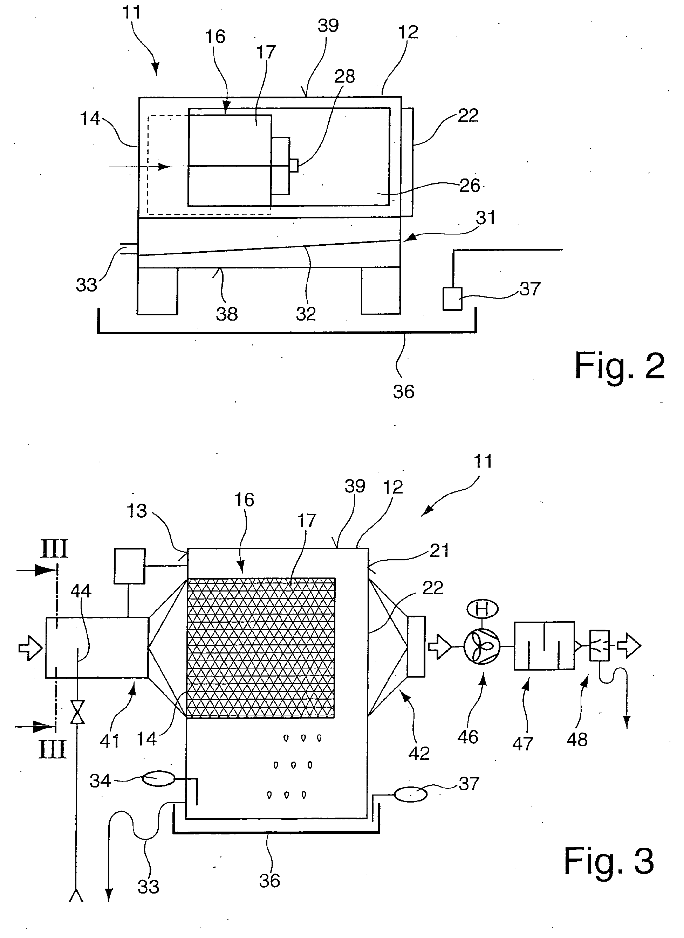

In Figur 1 ist eine erfindungsgemäße Vorrichtung 11 zum Abscheiden von einem mit Öl- und Emulsionbestandteilen verunreinigten Gasstrom dargestellt. Diese Vorrichtung 11 weist ein Gehäuse 12 auf, welches auf einer Vorderseite 13 zwei Zuführöffnungen 14 aufweist. Die Anzahl der Zuführöffnungen 14 ist nur beispielhaft. Den Zuführöffnungen 14 zugeordnet ist jeweils ein Filter 16, welcher als Filterkassette 17 mit mehreren Filterelementen 18 ausgebildet ist, die nachfolgend beschrieben werden. An einer Rückseite 21 des Gehäuses 12 ist eine Abführöffnung 22 vorgesehen, wie dies in Figur 2 gemäß einer schematischen Schnittdarstellung der Vorrichtung in Figur 1 dargestellt ist. An einer Seitenwand 24 ist eine verschließbare Öffnung 26 vorgesehen, durch welche der Innenraum des Gehäuses 12 zugänglich ist.

Der zumindest eine Filter 16 wird in dem Gehäuse 12 durch Streben 27 aufgenommen und zur Zuführöffnung 14 positioniert. Hierfür ist eine schnell lösbare Befestigung 28 vorgesehen, welche an einem seitlichen oder hinteren Abschnitt der Filterkassette 17 angreift. Diese schnell lösbare Befestigung 28 umfasst beispielsweise eine Gewindestange und ein Verriegelungselement, welches über einen Drehknopf betätigbar ist und an der Filterkassette 17 angreift, so dass diese unter zumindest geringem Druck an der Zuführöffnung 14 unter Zwischenschaltung eines Dichtelementes 29 anliegt. Dieses Dichtelement 29 ist in seiner Materialauswahl an die Art der Verunreinigungen im Gasstrom angepasst, so dass eine dichte Anordnung zur Zuführöffnung 14 gegeben ist.

An einer Unterseite des Gehäuses 12 ist ein Gehäuseabschnitt 31 vorgesehen, der einen Boden 38 bildet und eine Auffangwanne 32 beziehungsweise eine geringfügig geneigte Rinne 32 umfasst. In dieser Auffangwanne 32 werden die abgeschiedenen Öle und Emulsionen aufgefangen und gesammelt. Der Füllstand der aufgefangenen Menge an abgeschiedenem Öl und Emulsion wird durch eine Füllstandskontrolle 34 überwacht. Das aufgefangene Medium wird über einen Rücklauf 33 zur Aufbereitung des Mediums zurückgeführt.

Die Vorrichtung 11 kann in einer Bodenwanne 36 vorgesehen sein, welche zusätzlich eine Sonde 37 umfasst, um im Falle einer Leckage ein entsprechendes Signal an eine Steuerung weiterzugeben.

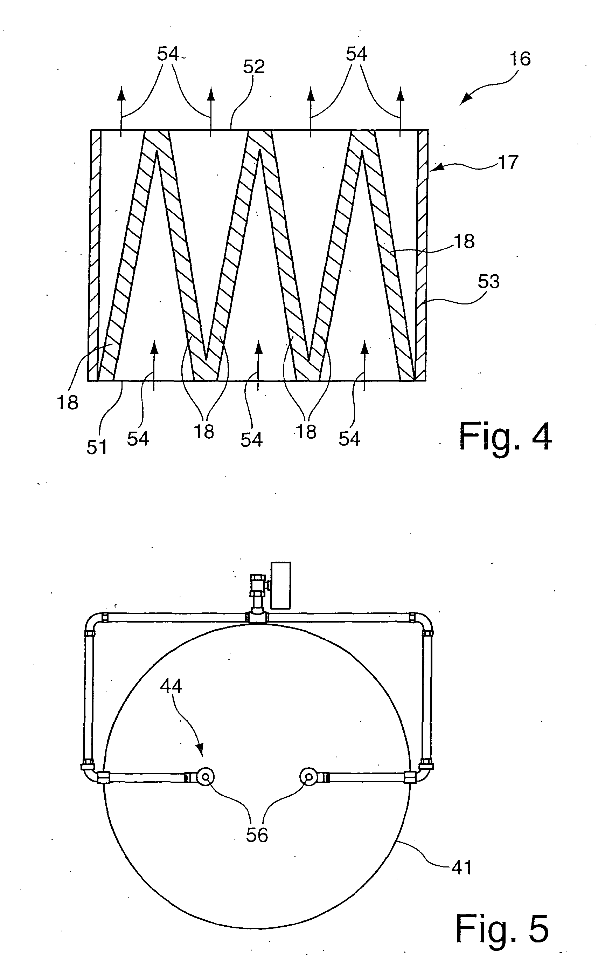

In Figur 3 ist eine schematische Darstellung der Vorrichtung 11 dargestellt. Auf einer Rohgasseite ist der Zuführöffnung 14 eine Rohgaszuströmstufe 41 zugeordnet. Gegenüberliegend ist auf der Reingasseite der Abführöffnung 22 eine Reingasabströmstufe 42 angeordnet. Im Ausführungsbeispiel ist vorgesehen, dass die Rohgaszuströmstufe 41 die Zuführöffnungen 14 gemeinsam umschließt. In der Rohgaszuströmstufe 41 kann eine Bedüsung 44 vorgesehen sein, die in Figur 5 beispielhaft näher dargestellt ist. Die Zuführung des Rohgases erfolgt horizontal. Der rohgasseitig zugeführte Volumenstrom wird gleichmäßig über die beiden Zuführöffnungen 14 den jeweilig zugeordneten Filterkassetten 17 zugeführt. Der Volumenstrom durchströmt in horizontaler Weise die Filterkassetten 17 und wird durch ein Absauggebläse 46 über die Reingasabströmstufe 42 abgeführt. Das Reingas durchläuft einen Schalldämpfer 47 und wird dem Kreislauf wieder zugeführt oder ins Freie ausgeblasen. Vorteilhafterweise kann dem Schalldämpfer 47 nachgeschalten ein Kriechölabscheider 48 vorgesehen sein, der mit der Aufbereitung des abgeschiedenen Mediums in Verbindung steht. Das abgeschiedene Medium im Filter 16 fällt vertikal nach unten in die Auffangwanne 32 und wird dort gesammelt.

Die in den Figuren beschriebenen Vorrichtungen 11 werden beispielsweise zum Abscheiden von wassermischbaren und nicht wassermischbaren Kühlschmierstoff-Aerosolen eingesetzt. Typische Einsatzfälle sind die spanabhebende Bearbeitung wie Bohren, Drehen, Fräsen, Räumen, Hobeln, Schleifen. Die Vorrichtungen 11 sind auf diese Anwendungen nicht beschränkt. Vielmehr werden die Filterelemente 18 auf die unterschiedlichen Einsatzfälle angepasst.

Das in der Vorrichtung 11 gemäß den Figuren 1 bis 3 beschriebene Grundmodul wie auch die weiteren Module in den nachfolgend dargestellten Figuren arbeiten nach dem Abscheideprinzip, wobei der Abscheideeffekt auf einer Kombination von Massenträgheit, Sperrwirkung, Koaleszenz, Agglomeration und/oder Diffusion beruht. Durch diese vorteilhaften mechanischen Abscheidemechanismen können Öl- und Emulsionsbestandteile hochprozentig abgeschieden werden. Insbesondere bei der vorliegenden Anordnung werden Emissionswerte gleich oder kleiner als 2 mg/m³ für wassermischbare Mineralölanteile im Aerosol als auch für nicht wassermischbare Mineralölanteile im Aerosol erzielt. Durch die Rückführung des in der Auffangwanne 32 gesammelten Mediums kann beispielsweise eine Wiederaufbereitung erfolgen, so dass bei der spanabhebenden Bearbeitung eine Rückführung des Kühlmittelschmierstoffes erfolgen kann. Dadurch ist eine erhebliche Einsparung ermöglicht und eine verringerte Umweltbelastung gegeben.

In Figur 4a ist eine Schnittdarstellung der Filterkassette 17 mit Filterelementen 18 in der Draufsicht gesehen dargestellt. Die Filterkassette 17 weist rohgasseitig eine Öffnung 51 auf und reingasseitig eine Öffnung 52. Im übrigen ist ein vollständig geschlossenes Gehäuse 53 vorgesehen, welches die Filterelemente 18 aufnimmt. Diese Filterelemente 18 beziehungsweise Kammerdemistoren sind zick-zack-förmig oder V-förmig angeordnet. In Figur 4a ist gemäß den Pfeilen 54 die Zuströmung und Abführung des Volumenstromes dargestellt. Die Filterelemente 18 stehen senkrecht in der Filterkassette 12 und bilden V-förmige Nischen, in welchen sich der eingeführte Volumenstrom zumindest geringfügig aufstaut, um im Anschluss daran durch die Filterelemente 18 hindurchzuströmen. Durch die V-förmige Ausgestaltung, welche beispielsweise gemäß der Abbildung einen Winkel von 5 bis 30° umfasst, wird des Weiteren ein größerer Strömungsweg in den Filterelementen 18 erzielt. Die Winkelanordnung der Filterelemente 18 zur Strömungsrichtung gemäß Pfeil 54 liegt vorteilhafterweise in einem Bereich zwischen 0 und 70°. Die winklige Anordnung ist auch abhängig von der Länge und Größe der Filterelemente als auch der Größe des zur Verfügung stehenden Bauraumes zur Anordnung der Filterkassetten 17.

Im Gehäuse 12 kann ein elektrostatischer Filter integriert oder dem zumindest einen Filter 16 nachgeschalten sein. Alternativ kann vorgesehen sein, dass reingasseitig ein oder mehrere elektrostatische Filter vorgesehen sind. Diese können kundenspezifisch eingesetzt werden.

Des weiteren können die Filterelemente 18 beispielsweise in Form eines sogenannten Fischgrätmusters vorgesehen sein. Ebenfalls können mehrere Filterelemente 18 in Form einer Lamellenjalousie eine Schrägstellung innerhalb des Filterelementes 18 aufweisen, wobei vorteilhafterweise im mittleren Bereich oder am Ende wiederum gegenläufig geneigte Filterelemente 18 positioniert sein können, um den hohen Wirkungsgrad der Abscheidung zu ermöglichen. Des weiteren können mehrere nebeneinander oder hintereinander angeordnete lambdaförmige Anordnungen der Filterelemente 18 vorgesehen sein.

Die Anordnungsmöglichkeiten der Filterelemente 18 ist hierauf nicht beschränkt. Bei allen Ausführungsformen ist bevorzugt eine parallele Durchströmung von mehreren Filterelementen 18 gegeben, so dass bevorzugt eine einstufige Reinigung erfolgt.

In einem Ausführungsbeispiel weist das Gehäuse 12 beispielsweise eine Größe von 1.050 x 2.800 x 2.300 mm auf und ist für einen Rohgasvolumenstrom bis circa 20.000 m³/h als Ölnebelabscheider einsetzbar. Das selbe Gehäuse 12 ist als Emulsionsnebelabscheider mit einem Volumenstrom bis zu circa 40.000 m³/h einsetzbar, wobei ein Gehäusevolumen von circa 6,8 m³ ausgebildet ist. Dies zeigt, dass ein sehr hoher Volumenstrom bezogen auf das Gehäusevolumen erzielt werden kann, der bei der Ausgestaltung als Emulsionsnebelabscheider 6.118 [m³/h] / m³ umfasst. Derartige Vorrichtungen werden mit einem Differenzdruck nach circa 8 bis 11 mbar betrieben.

In Figur 5 ist schematisch die Bedüsung 44 näher dargestellt, die insbesondere für Emulsionen eingesetzt wird. Beispielsweise sind zwei Düsen 56 vorgesehen, welche eine Bedüsung des verunreinigten Gasstromes mit Wasser oder Emulsion ermöglichen, um ein Zusetzen der Filterelemente 18 zu verhindern oder verringern. Die Bedüsung 44 ist in der Rohgaszuströmstufe 41 integriert. Es ist vorteilhafterweise vorgesehen, dass eine Bedüsung bei Überschreiten des vorgebenen Referenzdruckes während des Betriebes ermöglicht ist. Die Anzahl und Anordnung der Düsen 56 für die Bedüsung kann wahlweise erfolgen. Es können eine Düse 56 zentral oder mehrere Düsen 56 sternförmig oder kreisförmig angeordnet sein. Die Anzahl der Düsen 56 wird auf den Volumenstrom angepasst.

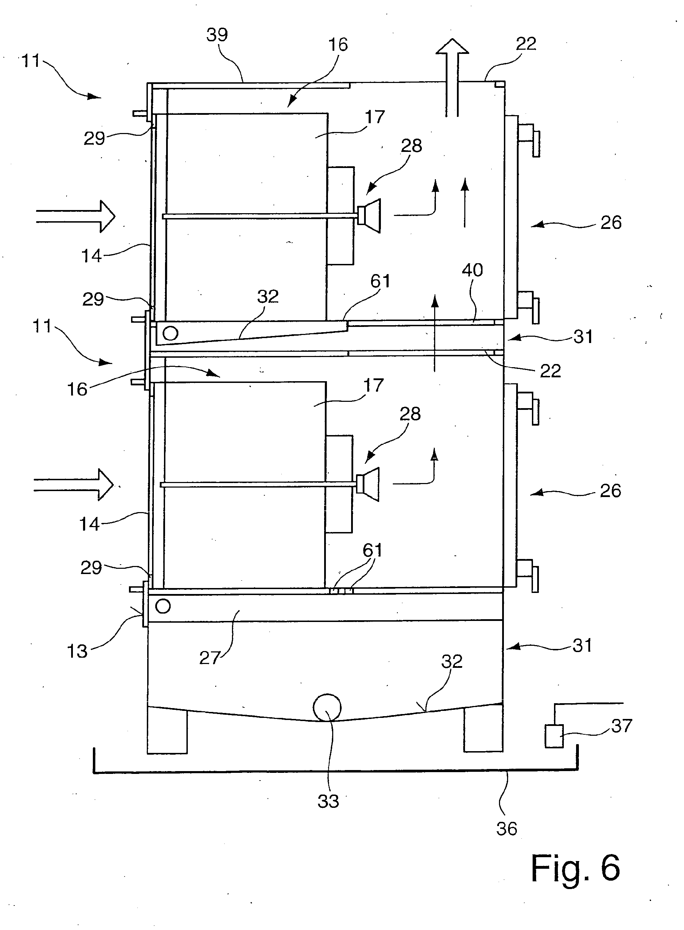

In Figur 6 ist eine schematische Darstellung von zwei übereinander angeordneten Vorrichtungen 11 dargestellt. Das Gehäuse 12 weist im Unterschied zu der in den Figuren 1 bis 3 beschriebenen Ausführungsform eine Abführöffnung 22 auf, welche an der Oberseite 39 des Gehäuses 12 vorgesehen ist. Die Rückseite 21 des Gehäuses 12 ist als verschließbare Öffnung 26 ausgebildet. An der Unterseite des Gehäuses 12 ist der Gehäuseabschnitt 31 mit einer Auffangwanne 32 vorgesehen. Bei diesem Ausführungsbeispiel ist vorgesehen, dass die Reingasabströmstufe 42 das Reingas nach oben abführt. Beim Übereinandersetzen der Gehäuse 12 ist deshalb in dem oberen Gehäuse 12 ein Gehäuseabschnitt 31 zugeordnet, welcher eine Auffangwanne 32 umfasst, die zumindest geringfügig größer als die Grundfläche der Filterkassette 17 ausgebildet ist und eine Durchgangsöffnung 40 aufweist, damit der Volumenstrom nach Durchströmen des unteren Filters 16 nach oben zur Reingasabströmstufe 42 geführt werden kann. Die obere Auffangwanne 31 ist über eine Fallleitung mit der unteren Auffangwanne 31 verbunden, um das gesammelte Medium in den Kreislauf zur Aufbereitung des Mediums rückzuführen. Unmittelbar hinter der Filterkassette 17 sind Durchbrechungen 61 vorgesehen, welche ermöglichen, dass gegebenenfalls nach hinten austretendes und abgeschiedenes Medium ebenfalls hindurchtreten und durch die Auffangwanne 32 gesammelt werden kann.

Die Reinigung und der Austausch der Filterelemente 18 sind in einfacher Weise ermöglicht. Nach Öffnen der verschließbaren Öffnung 26 erfolgt ein Lösen der schnell lösbaren Befestigung 28. Die Filterkassette 17 kann dann herausgenommen und durch Absprühen gereinigt oder durch neue Filterelemente 18 beziehungsweise Filterkassetten 17 ersetzt werden. Es kann ebenso vorgesehen sein, dass die Filterkassette 17 durch neue Filterelemente 18 ersetzt wird. Alternativ kann ebenso vorgesehen sein, dass über die Bedüsung 44 in frei bestimmbaren oder vorgesehen Intervallen automatisch eine Spülung mit Spülwasser oder Emulsion erfolgt, um eine Reinigung durchzuführen.

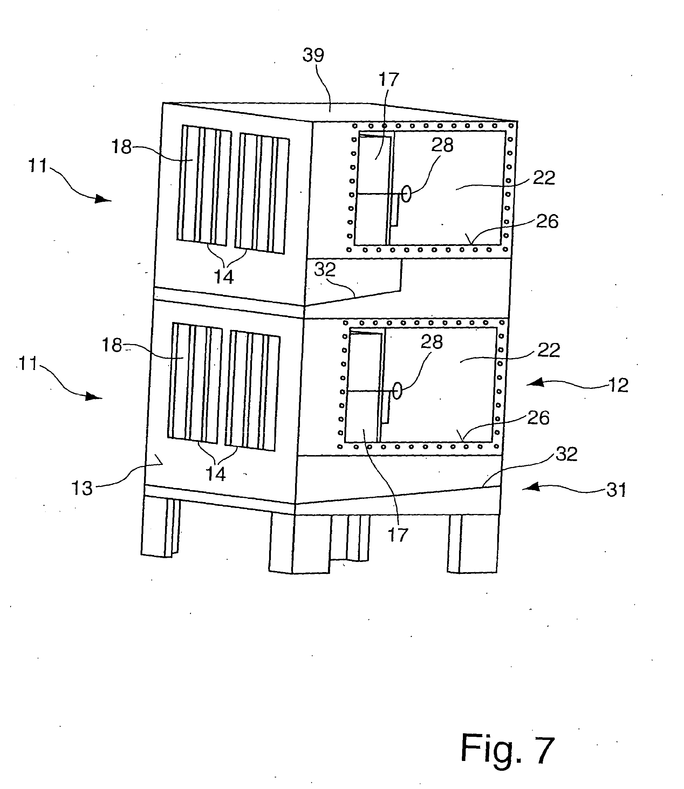

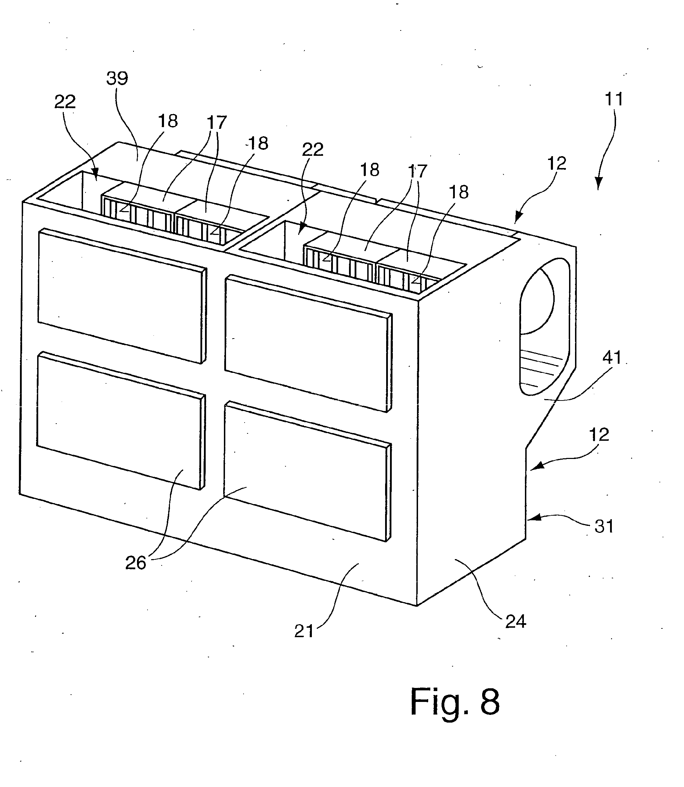

In Figur 7 ist eine alternative Ausgestaltung zu Figur 6 dargestellt. Im Unterschied zu Figur 6 ist in Figur 7 die Abführöffnung 22 an der Seitenwand 24 des Gehäuses 12 eingebracht. Die verschließbare Öffnung kann auf der Rückseite 31 beibehalten bleiben. Sofern die Abführöffnung 22 an der Rückseite 31 vorgesehen ist, können zwei Grundmodule, wie dies in Figur 7 dargestellt ist, übereinander positionierbar sein, wobei über eine Fallleitung eine Verbindung von einer oberen Auffangwanne 32 zu einer unteren Auffangwanne 32 erfolgt. Die Abführung der Reingase kann somit anwendungsspezifisch seitlich, rückseitig oder nach oben erfolgen. Es versteht sich, dass ein oder mehrere Gehäuse 12 übereinander oder nebeneinander angeordnet sein können. Beispielsweise ist eine Anordnung von vier Gehäusen 12 in Figur 8 dargestellt. Bei dieser Anordnung ist vorgesehen, dass über eine Rohgaszuströmstufe 41 eine Aufteilung des Volumenstromes in acht Zuführöffnungen 14 vorgesehen ist. Die aneinandergrenzenden seitlichen Gehäusewandabschnitte sind geöffnet ausgebildet. Dadurch ist ermöglicht, dass nach Durchströmen des Volumenstromes durch die Filter 16 ein gleichmäßiges Absaugen über Öffnungen in der Oberseite 39 der Gehäuse ermöglicht ist.

Bei der Anordnung von mehreren Gehäusen 12 zueinander werden diese vorteilhafterweise durch eine Verschraubung miteinander verbunden. Die Gehäuse 12 sind bevorzugt derart ausgelegt, dass diese an die unterschiedlichen Einsatzfälle einfach anpassbar sind, so dass mehrere Gehäuse 12 übereinander oder nebeneinander in Abhängigkeit des zur Verfügung stehenden Raumes sowie in Abhängigkeit der erforderlichen zu reinigenden Volumenströme vorgesehen sein können.

Der erfindungsgemäße modulare Aufbau ermöglicht, dass eine Anpassung der Vorrichtung 11 an unterschiedliche Anforderungen und Mengen der Volumenströme ermöglicht ist. Somit kann beispielsweise eine einfache Aufrüstung und Nachrüstung oder eine Verringerung der Anlage und Einsparung an Stellfläche ermöglicht werden, wobei die Funktion und der hohe Wirkungsgrad dieses einstufigen Verfahrens unabhängig der Anzahl der Gehäuse 12 beibehalten wird.

## Patentansprüche

1. Verfahren zum Abscheiden von mit Öl- und Emulsionsbestandteilen verunreinigten Gasströmen, **dadurch gekennzeichnet, dass** das Rohgas horizontal einer Zuführöffnung (14) eines Gehäuses (12) zugeführt wird, dass das Rohgas zumindest ein der Zuführöffnung (14) zugeordnetes Filterelement (18) von zumindest einem Filter (16) durchströmt, dass mehrere Filterelemente (18) gleichzeitig von dem zugeführten Rohgas durchströmt werden und dass das Reingas über eine Abführöffnung (22) abgesaugt wird.

2. Verfahren nach Anspruch 1, **dadurch gekennzeichnet, dass** für eine Abscheidung für Ölbestandteile das Gehäuse (12) mit einem Volumenstrom in einem Bereich von ca. 2.000 bis 20.000 m³/h gespeist wird.

3. Verfahren nach Anspruch 1, **dadurch gekennzeichnet, dass** für eine Abscheidung von Emulsionsbestandteilen das Gehäuse (12) mit einem Volumenstrom in einem Bereich von ca. 4.000 bis 42.000 m³/h gespeist wird.

4. Verfahren nach einem der vorhergehenden Ansprüche, **dadurch gekennzeichnet, dass** das zumindest eine Filterelement (18) von einem verunreinigten Gasstrom horizontal durchströmt wird.

5. Vorrichtung zum Abscheiden von mit Öl- und Emulsionsbestandteilen verunreinigten Gasströmen, insbesondere zur Durchführung des Verfahrens nach einem der vorhergehenden Ansprüche, mit einem Gehäuse (12), welches zumindest einen Filter (16) umfasst, mit zumindest einer auf der Rohgasseite vorgesehen Zuführöffnung (14) und zumindest einer auf der Reingasseite vorgesehen Abführöffnung (22), **dadurch gekennzeichnet, dass** das Gehäuse (12) als Grundelement ausgebildet ist, welches mit einem oder mehreren Gehäusen (12) mit gleichem oder analogem Aufbau zur Anpassung an unterschiedliche Mengen der Volumenströme von verunreinigten Gasströmen zusammensetzbar ist.

6. Vorrichtung nach Anspruch 5, **dadurch gekennzeichnet, dass** zumindest eine Rohgaszuströmstufe (41) vorgesehen ist, welche an die Anzahl der Zuführöffnungen (14) anpassbar ist und den zugeführten Volumenstrom gleichmäßig in Abhängigkeit der Zuführöffnungen (14) aufteilt.

7. Vorrichtung nach Anspruch 6, **dadurch gekennzeichnet, dass** in der Rohgaszuströmstufe (41) vorzugsweise einstellbare Leitbleche vorgesehen sind.

8. Vorrichtung nach Anspruch 5, **dadurch gekennzeichnet, dass** die zumindest eine Reingasabführstufe (42) an die Anzahl der Abführöffnungen des Gehäuses (12) oder der Gehäusegruppen anpassbar ist.

9. Vorrichtung nach Anspruch 5, **dadurch gekennzeichnet, dass** der zumindest einen Zuführöffnung (14) zumindest eine Filterkassette (17) mit wenigstens einem Filterelement (18) zugeordnet ist, welches vorzugsweise durch eine verschließbare Öffnung (26) im Gehäuse (12) austauschbar zur zumindest einen Zuführöffnung (14) vorgesehen ist.

10. Vorrichtung nach einem der Ansprüche 5 bis 9, **dadurch gekennzeichnet, dass** die Zuführung des Rohgasstromes zum Gehäuse (12) frontseitig und die Abführung des Reingasstromes rückseitig, seitlich oder an der Oberseite (29) des Gehäuses (12) vorgesehen ist.

11. Vorrichtung nach einem der Ansprüche 5 bis 10, **dadurch gekennzeichnet, dass** in Strömungsrichtung gesehen nach dem zumindest einen Filter (16) im Boden des Gehäuses (12) zumindest eine Durchgangsöffnung (58) vorgesehen ist, welche mit einer darunter angeordneten Auffangwanne (32) für abgeschiedenes Medium kommuniziert.

12. Vorrichtung nach einem der Ansprüche 5 bis 11, **dadurch gekennzeichnet, dass** unterhalb dem Gehäuse (12) ein Gehäuseabschnitt (31) mit zumindest einer Auffangwanne (32) anbringbar ist.

13. Vorrichtung nach Anspruch 12, **dadurch gekennzeichnet, dass** der Gehäuseabschnitt (31) eine sich über die Grundfläche des Gehäuses (12) erstreckende Auffangwanne (32) umfasst.

14. Vorrichtung nach Anspruch 12, **dadurch gekennzeichnet, dass** der Gehäuseabschnitt (31) eine Auffangwanne (32) umfasst, die zumindest geringfügig größer als die zum Boden (38) des Gehäuses (12) weisende Grundfläche des zumindest einen Filters (16) ausgebildet ist und in dem Boden (38) eine Durchgangsöffnung (40) umfasst, welche im Wesentlichen in der Größe einer Abführöffnung (22) entspricht.

15. Vorrichtung nach einem der Ansprüche 5 bis 14, **dadurch gekennzeichnet, dass** das Gehäuse (12) modular aufgebaut ist und zumindest zwei Schienen (27) umfasst, welche den zumindest einen Filter (16) aufnehmen und zur Zuführöffnung (14) positionieren.

16. Vorrichtung nach einem der Ansprüche 5 bis 15, **dadurch gekennzeichnet, dass** eine Gruppe von Gehäusen (12) durch lösbare Schraubverbindungen zueinander anordenbar sind, deren Bohrungen in dem Gehäuse (12) vorkonfektioniert sind.

17. Vorrichtung nach einem der Ansprüche 5 bis 16, **dadurch gekennzeichnet, dass** der Filter (16) zumindest eine Filterkassette (17) umfasst, in welcher zumindest ein Filterelement (18) vorgesehen ist.

18. Vorrichtung nach Anspruch 17, **dadurch gekennzeichnet, dass** das zumindest eine Filterelement (18) der Filterkassette (17) auswechselbar ist.

19. Vorrichtung nach Anspruch 17, **dadurch gekennzeichnet, dass** die Filterelemente (18) in einer Draufsicht auf die Filterkassette (17) gesehen eine zick-zack-förmige Anordnung oder zumindest eine V-förmige Anordnung der Filterelemente (18) in der Filterkassette (17) aufweisen.

20. Vorrichtung nach Anspruch 17, **dadurch gekennzeichnet, dass** die Filterelemente (18) fest in einer Filterkassette (17) positioniert sind.

21. Vorrichtung nach Anspruch 17, **dadurch gekennzeichnet, dass** die Filterelemente (18) in der Filterkassette (17) stehend angeordnet sind.

22. Vorrichtung nach Anspruch 17, **dadurch gekennzeichnet, dass** das zumindest eine Filterelement (18) in einem Winkel zwischen 0° bis 70° zur Strömungsrichtung ausgerichtet ist.

23. Vorrichtung nach Anspruch 17, **dadurch gekennzeichnet, dass** die Filterkassette (17) ein geschlossenes Gehäuse (53) mit einer rohgasseitig und reingasseitig angeordneten Öffnung (51, 52) aufweist, welche vorzugsweise deckungsgleich zueinander angeordnet sind.

24. Vorrichtung nach einem der Ansprüche 17 bis 23, **dadurch gekennzeichnet, dass** die zumindest eine Filterkassette (17) mit zumindest einem Filterelement (18) durch eine schnell lösbare Befestigung (28) zur zumindest einen Zuführöffnung (14) fixierbar angeordnet ist.

25. Vorrichtung nach Anspruch 24, **dadurch gekennzeichnet, dass** die schnell lösbare Befestigung (28) seitlich, rückseitig oder auf der Oberseite des Gehäuses (53) angreift und durch eine verschließbare Öffnung (26) des Gehäuses (12) zugänglich ist.

26. Vorrichtung nach einem der Ansprüche 5 bis 25, **dadurch gekennzeichnet, dass** ein elektrostatischer Filter reingasseitig nach dem zumindest einen Filter (16) vorgesehen ist.

27. Vorrichtung nach einem der Ansprüche 5 bis 26, **dadurch gekennzeichnet, dass** bei wenigstens zwei zueinander angeordneten Grundelementen der Gehäuse (12) an den aneinandergrenzenden Wandabschnitten zur Bildung eines gemeinsamen Innenraumes eine Verbindungsöffnung zur Durchströmung des Reingases vorgesehen ist.
